# EUROPEAN PATENT APPLICATION

(11) **EP 2 505 236 A1**
(43) Date of publication of application: **03.10.2012**
(21) Application number: 10832679.4
(22) Date of filing: 24.11.2010
(51) Int. Cl.: A63B 57/00, C08L 3/02, C08L 21/00

(54) **100% BIODEGRADABLE GOLF TEE**

(30) Priority: 25.11.2009 ES 200902233
(71) Applicant: López-Pozas Lanuza, Luis Henrique, 04620 Vera (Almería) (ES); Cabanillas González, Germán, 04620 Vera (Almería) (ES)
(72) Inventor: López-Pozas Lanuza, Luis Henrique, 04620 Vera (Almería) (ES); Cabanillas González, Germán, 04620 Vera (Almería) (ES)
(74) Representative: Herrera Hume, Fernando
(86) International application number: PCT/ES2010/000476
(87) International publication number: WO 2011/064418

(57) **Abstract**

The present invention relates to a golf tee having the particularity of being 100% biodegradable and density and strength sufficient for the use to which it is destined, the materials making up the mixture not containing heavy metals or toxic elements. The plastic raw material is 100% biodegradable and has a specific weight of between 0.7 g/cm3 and 1.5 g/cm3. The material is composed of bioplastics formed by polymers of vegetable origin such as: rubber, latex, starch, fecula and cellulose, or of biodegradable thermoplastics derived from petroleum composed of biodegradable polymers and elastomeric polymers, such as synthetic rubber, together with a filler of inert and non-toxic minerals from the group of the carbonates and mineral salts, such as calcium carbonate, sodium bicarbonate or barium sulphate, up to a maximum of 50% of the mixture.

## Description

The present invention relates to a variety of golf tee for use in the sport of golf having the particularity of being 100% biodegradable, and also the novelty of having a density and strength sufficient for the use to which it is destined, the materials making up the mixture not containing heavy metals or toxic elements. But it also has another novelties relating to the process of molding by injection, the injection point that is 1 mm, the mold itself, the materials, the mixing process and proportions, as seen below.

The golf tees are an essential part in the development of the sport of golf. They are the support of the golf ball in the kick off in each hole. They are usually made of wood, sawdust, or plastic and have a short life, since the golf club often impact directly on them, breaking them and thus leaving spread about the kick area. Almost all of them are broken leaving the sheath embedded in the green, and the head flies off in pieces. Thus, on the one hand are numerous sheaths are embedded and a multitude of small pieces are spread about the field.

The use of non-biodegradable plastic golf tees has important environmental problems, the natural soil is full of them or pieces of them, which are not pick up by the cleaning teams of golf courses and then poured as garbage without any kind of waste treatment. It is in this act of pouring non-biodegradable plastics without even giving them recycling treatment when more contamination is produced. Currently the most widely used plastics are PVC, ABS and polypropylene which can take long to disappear from the environment, even centuries. There are also golf tees manufactured with organic remains of animals and plants, which ensure its decomposition or dissolution in the natural environment. And on the other hand there are golf tees of wood or sawdust which are not ecological from the point of view of deforestation, helping to deforestation of the manufacturing countries of this product, and also do not facilitate the growth of the grass, remaining this deposited for prolonged periods of time. Finally there is a variety made with minerals that in contact with the water simply crumble to dust remaining their remains in the same site. For this reason, currently the golf associations and golf courses demand a 100% biodegradable golf tee which at the same time complies with the functions for the development of the sport.

In regard to the plastic golf tees, the problem occurs when it is interpreted that biodegradable plastic golf tee are those which in its composition include biodegradable materials in a percentage that occasionally does not reach 50% of the mixture, or are not biodegraded to at least 90%, remaining a maximum residue of 10% of biomass in the first six months, when really they can be homologated as biodegradable in Europe, according to the European Standard EN 13,432: 2000 "Requirements for packaging recoverable through composting and biodegradation", EN 14,855 "Determination of the ultimate aerobic biodegradability of plastic materials under controlled composting conditions", ASTM D6400-99 "Standard Specification for Compostable Plastics", ASTM D5338-98 "Standard test method for determining aerobic biodegradation of plastic materials under controlled composting conditions", the standard ISO 14,851 about the "Determination of the ultimate aerobic biodegradability of plastic materials in an aqueous medium" in addition to the materials exceeding indistinctly the parameters of any of these regulations, as it is the case of our materials.

However, it should be noted that the biodegradable plastics can be derived from petroleum and should not be confused with bioplastics. The standard ASTM D-5488-94d defines "biodegradable" as "capable of undergoing decomposition into carbon dioxide, methane, water, inorganic compounds, or biomass in which the predominant mechanisms is the enzymatic action of micro-organisms that can be measured by standard tests, over a specific period of time, reflecting available disposal conditions". A bioplastic is a plastic of natural origin produced by a living organism and with biodegradable character, synthesized from renewable energy sources, so it barely produces contamination.

These developments give to the object of invention significant advantages in regard to the state of the art. Its industrial application falls within the scope of the manufacture of golf tees for sports golf, and in particular 100% biodegradable golf tees.

The proposed invention comes to solve this environmental problem that is created when after playing to golf, this game being developed in the countryside, in full nature, numerous pieces of golf that have been used in the game, remain dispersed or buried on the ground. Once cleared the game area, these are discarded to the local dump yard as waste without any treatment. If this is multiplied by all the times a round of golf is played, at end of the year, we will have as a result a considerable damage to nature and fauna. In another occasions, the smallest, or buried, pieces remain contaminating that game area causing damage to the grass of the playing field.

The state of the art in the development of golf tees for sports golf has evolved to provide biodegradable golf tees that minimize the ecological damage, in particular, there is a variety of golf tees manufactured with organic remains from animals and vegetables, that are broken down in the open air and in contact with water, but it has always encountered with an obstacle of difficult solution, and it is that until now it has been impossible to get 100% biodegradable golf tees while possessing a density and flexibility sufficient for the use to which they are applied. Another drawback with these current materials is the scarce or excessive rigidity of the materials used. The first ones are broken easily, needing a constant replacement, and the excessive rigidity produces scratches in the golf clubs. Both situations affect the accuracy of the strike, which is the basis of this sport.

In this sense, there are well known the golf tees of the documents US 5,690,563 which deals about a golf tee made of organic remains of fish and animal meat in addition to an outer layer of corn to protect it from moisture and give it more rigidity. This document mentions other documents relating to golf tees composed of organic and mineral remains with decomposition and solubility properties in the environment: US 5,040,792, talks about a golf tee composed of organic and inorganic materials undergoing a cooking and pressure molding process, US 5,046,730 refers to a golf tee made of water-, vegetable fiber-, and sugar-soluble plastics, with a system of manufacturing by pressure molding and with non-biodegradable lacquering to prevent moisture, US 5,082,264 relates to a golf tee composed of earthy material and a manufacturing and lacquering process, and US 5,085,432, This document refers to a water-soluble golf tee, composed of 90% of powdered granite and a pressure molding process. The document US 2007/0287559 Al refers to a golf tee made of organic waste materials including flesh and feces of cattle, which provide nutrients to the grass on the field. The document US 6,319,156 refers to a golf tee with fertilizing properties using components such as bentonite, potassium nitrate, sodium nitrate, and sand.

All these documents have in common a type of animal, vegetal, and mineral organic raw material which dissolves, melts or degrades quickly in the field into the contact with water, a costly and slow preparation process of the raw material, and an industrial application by pressure molding with post-finishing processes.
In regard to the biodegradation, these aforementioned golf tees are biodegraded by putrefaction due to its materials organic used, and can attract insects and small rodents for their consumption, nothing desirable situation for a golf course. On the contrary, this invention is about a clean biodegradation, without odors, produced by micro-organisms, fungi and algae.
These golf tees in general have great drawbacks that come to be resolved in our invention.

The disadvantage in these types of materials mentioned above is that they need a long and expensive preparation to give them the consistency needed to be molded, so the processing times are very slow and the post-molding process is complicated and costly. Among other processes are included dehydration, cooking, crushing and disinfection of raw materials. Another problem that they do not end to resolve is the rapid decomposition due to the moisture and the lack of rigidity of the same, because of its composition and molding pressure process.

It has the disadvantages of moisture absorption with fatal consequences for the product, which loses easily its stability, so the packaging and the product must be sealed with the consequent cost that this involved. It also has another disadvantage, and is that once obtained the golf tees of the mold, they need to have the manufacturing environment controlled to prevent that an excess of temperature causes the tees to become pasty and deformed before introducing them to the final packaging. It must not be forgotten that the majority of golfers reuse the tees that are not broken, saving them in pockets, hands or mouth as practice more common, so the moisture attacks them quickly, and this is not very healthy due to its ingredients of composition. On the other hand, when opening the package for use, the aforementioned moisture absorption already begins, and without a proper temperature control, begins to rapidly lose its shape becoming very soon in tees unfit for use, because it has already begun to affect its dissolution.

In this sense, the approaches to the goal of achieving biodegradable golf tees have been materialized in the previous documents, although none of them has achieved the 100% biodegradable golf tees proposed in the present invention.

With regard to the elaboration process, once the materials have passed a process of selection, mixing, cocking, dehydration, this is pressure molded and in some cases subjected to vacuum processes to eliminate the air bubbles, which would produce a flawed finish. All this entails an increase of times and production costs considerably higher than that proposed in this document.

These processes are different from that proposed by the present invention, since it is not based on the injection of biodegradable bioplastics and thermoplastic composed of biodegradable polymers.

Against the drawbacks exposed, the advantages of the present invention are as follows: the obtained product is more resistant to the moisture and heat, so it is no necessary to seal the container or the product itself so that it does not lose stability and therefore has a very large time margin to be used, without presenting storage issues. The biodegradability of our tee will begin when is lying on the natural environment or a dump yard, not during its use and/or storage, so the use and contact with the hands of the players does not result in its deterioration.

It is a clean biodegradation, and without odors, produced by micro-organisms, fungi and algae, the 100% biodegradable golf tees of this invention not attract insects and small rodents for its consumption.

The plastic raw material is 100% biodegradable and has a specific weight of between 0.7 g/cm3 and 1.5 g/cm3. The material of the proposed invention is composed of bioplastics formed by polymers of vegetable origin such as: rubber, latex, starch, fecula and cellulose, or of biodegradable thermoplastics derived from petroleum composed of biodegradable polymers and elastomeric polymers, such as synthetic rubber, together with a filler of inert and non-toxic minerals from the group of the carbonates and mineral salts, such as calcium carbonate, sodium bicarbonate or barium sulphate, up to a maximum of 50% of the mixture.

Under normal conditions, 90% of the bioplastic mass is biodegraded in gases, CO2, O2, and H₂O before the first six months, remaining a solid residue of biomass of 10%, thus achieving a biodegradability of 100%, thereby complying with the regulations.

The biodegradation property of the product object of this invention mainly depends on the action of microorganisms and fungi, but also depends on the oxo-biodegradation with light and in the presence of water, factors that appear for both the smallest pieces that remain in the field, and the remains collected and poured in the garbage.

The raw materials mentioned above give to the golf tee a stiffness enough for its handling and positioning, nailing it on the ground, while giving it an ideal flexibility so that the golf club does not suffer due to the impact, scratching its surface, and consequently, deviates the ball of its trajectory, while a bad blow tends to an easy breakage of the golf tee, thus preserving the golf clubs from marks.

The molds for the injection are distributed on changeable plates, making it possible to remove any of them if it is flawed without the need of stopping the production while it is repaired in the workshop. The injection point of the present invention ranges between 0.5 and 2 mm, being the preferred injection point of 1 mm.

The interchangeable plates have different thicknesses that result in golf tees of any desired size, changing only one plate of the mold, which reduces cost since it is not necessary a whole mold for each size of golf tee.

The cavities of the molds are finished in a polished mirror which gives a bright and polished finish, thereby avoiding having to be painted, lacquered, or polished after being injected, so it reduces the cost of production and guarantees their biodegradability, not using other chemical agents for its polishing.

The mold has a hot camera that keeps the mixture at its optimum temperature when is injected, while solidifies the previous one in the mold, not overheating the mixture before it is injected, thereby reducing the run towards the cavity and generating less amount of material to be recycled, with its consequent reduction in costs.

The 100% biodegradable golf tees proposed in this invention are formed by a material made up of the following proportions in relation to the weight:
Bioplastic raw material with a specific weight of between 0.7 gr/cm3 and 1.5 gr/cm3 composed of:
   A bioplastic formed by biodegradable polymers of vegetal origin, based on potato starch, between 50% and 100%, together with a mineral filler, such as calcium carbonate, sodium bicarbonate o barium sulphate, up to a maximum of 50%.

The structure supporting the molds is formed by at least four housings in which four rectangular plates of pre-templated and stainless steel fit, where the moulds are. The rectangular plates are removable, so that if any one is damaged by the use and has to be repaired, it is removed without the need of stopping the production for this reason. The plate, where the golf tee is engraved, has several thicknesses, thus producing any desired size. The injection point of each mold is 1 mm, with a valve closure system to cut off the flowing of material into the cavity, which gets an easy sloughing of the golf tee without that marks appear. The injector introduces the material to the feeder head, which runs through the mold by injecting into the cavities of the molds. The cavities of the molds are finished in a polished mirror which gives a bright and polished finish to the golf tees without the need to submit them later to coats of paint, finishing or polishing lacquers. Once finished the injection, the ejectors evacuate the pieces out of the mold easily thanks to the internal cooling circuit of the plates, which achieves the solidification and compaction of the pieces in its cavities, thus accelerating the production cycles.

In a different embodiment a bioplastic composed of biodegradable elastomer polymers of vegetal origin such as rubber derived from latex, between 50% and 100%, is used together with a mineral filler such as calcium carbonate, sodium bicarbonate or barium sulphate, up to a maximum of 50%.

In another different embodiment a biodegradable thermoplastic composed of biodegradable elastomer polymers derived from petroleum, such as synthetic rubber, between 50% and 100%, is used together with mineral filler such as calcium carbonate, sodium bicarbonate or barium sulphate up to a maximum of 50%.

In another different embodiment a biodegradable thermoplastic composed of biodegradable polymers derived from petroleum, between 50% and 100%, is used together with mineral filler such as calcium carbonate, sodium bicarbonate or barium sulphate up to a maximum of 50%.

For a better understanding of the proposed invention are represented by way of non-limitative example the following drawings:

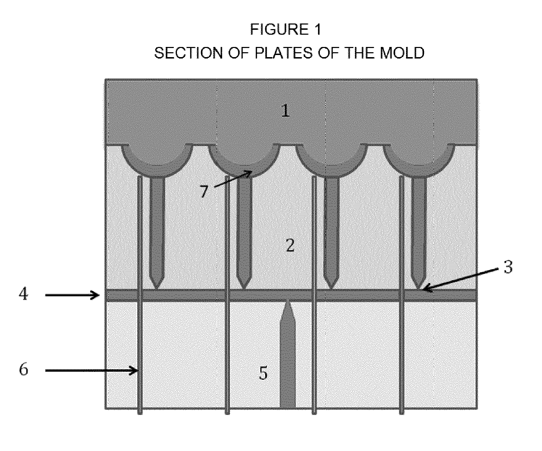

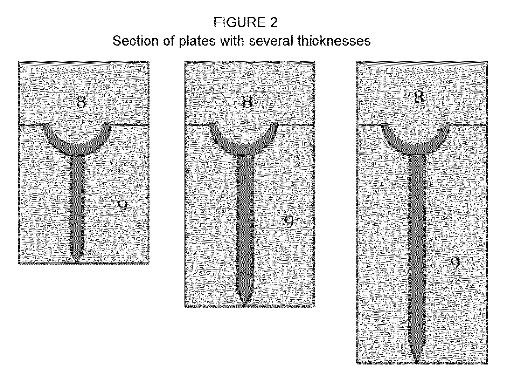

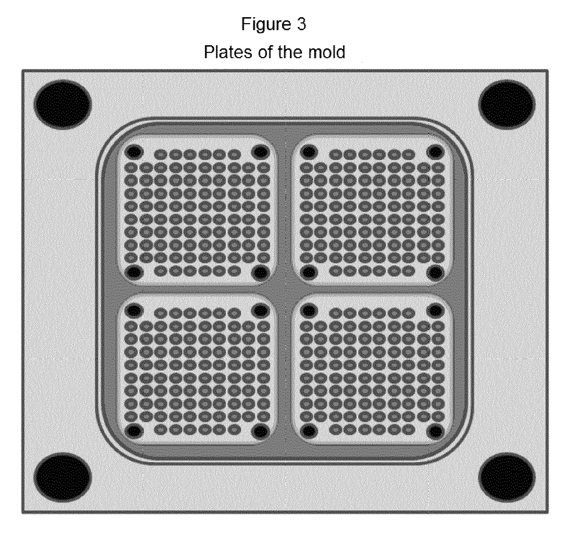

Figure 1: Section view of the removable plates
   The numbered details correspond to:
   (1) Interchangeable plate of the tee cup
   (2) Interchangeable plate of the tee sheath
   (3) Injection point
   (4) Feeder head
   (5) Head feed by injection
   (6) Ejectors
   (7) Cavity of the figures with polished mirror
Figure 2
   (1) Interchangeable plate of the tee cup
   (2) Interchangeable plates of the tee sheath in several sizes
Figure 3

### Plates of the mold

The present invention is illustrated with the following example, or preferred embodiment, which should not be considered as a limitation of its scope. Thus, 100% biodegradable golf tees proposed in this invention are made up of a material composed of the following proportions in relation to the weight:
Plastic raw material with a specific weight of between 0.7 gr/cm3 and 1.5 gr/cm3 composed of:
   A bioplastic formed by biodegradable polymers derived from 80% potato starch 20% calcium carbonate

The structure supporting the molds is formed by at least four housings in which four rectangular plates of pre-templated and stainless steel fit, where the moulds are (1) (2), (8) (9). The rectangular plates are removable, so that if any one is damaged by the use and has to be repaired, it is removed without the need of stopping the production for this reason. The plate, where the golf tee is engraved, has several thicknesses, thus producing any desired size (9). The injection point (3) of each mold is 1 mm, with a valve closure system to cut off the flowing of material into the cavity, which gets an easy sloughing of the golf tee without that marks appear. The injector (5) introduces the material to the feeder head (4), which runs through the mold (2) (9), by injecting into the cavities of the molds. The cavities of the molds are finished in a polished mirror which gives a bright and polished finish (7) to the golf tees without the need to submit them later to coats of paint, finishing or polishing lacquers. Once finished the injection, the ejectors (6) evacuate the pieces out of the mold easily thanks to the internal cooling circuit of the plates, which achieves the solidification and compaction of the pieces in its cavities, thus accelerating the production cycles.

## Claims

1. 100% biodegradable golf tees, **characterized by** being made up from a plastic raw material with a specific weight of between 0.7 gr/cm3 and 1.5 gr/cm3 composed of a bioplastic formed by biodegradable polymers of vegetal origin, based on fecula, starch, and potato, corn cellulose, or another vegetal considered to be ideal, between 50% and 100%, together with a mineral filler based on calcium carbonate, sodium bicarbonate o barium sulphate, up to a maximum of 50%.

2. 100% biodegradable golf tee, according to the claim 1, **characterized in that** it is subjected to an injection molding process, in which the structure sustaining the molds is composed of four housings in which four rectangular plates are fitted where the engraved molds are.

3. 100% biodegradable golf tee, according to the claims 1-2, **characterized in that** the rectangular plates are removable, so that if any one is damaged by the use and has to be repaired, it is removed without the need of stopping the production for this reason.

4. 100% biodegradable golf tee, according to claims 1-3, **characterized in that** the injection point of each mold is 1 mm, with a valve closure system to cut off the flowing of material into the cavity, which gets an easy sloughing of the golf tee without that marks appear.

5. 100% biodegradable golf tee, according to claims 1-4, **characterized in that** the injection point of each mold ranges between 0.5 and 2 mm.

6. 100% biodegradable golf tees, according to claims 1-5, **characterized in that** the cavities of the molds are finished in a polished mirror which gives a bright and polished finish to the golf tees without the need to submit them later to coats of paint, finishing or polishing lacquers.

7. 100% biodegradable golf tee, according to claims 1-6, **characterized in that** the interchangeable plates where the figures are engraved are of different thicknesses to obtain different sizes replacing only a plate.

8. 100% biodegradable golf tees, according to claims 1-7, **characterized in that** in a different embodiment a bioplastic composed of biodegradable elastomer polymers of vegetal origin such as rubber and latex derivatives, between 50% and 100%, is used together with a mineral filler such as calcium carbonate, sodium bicarbonate or barium sulphate, up to a maximum of 50%.

9. 100% biodegradable golf tees, according to claims 1-7, **characterized in that** in another different embodiment a biodegradable thermoplastic composed of biodegradable elastomer polymers derived from petroleum, such as synthetic rubber, between 50% and 100%, is used together with mineral filler such as calcium carbonate, sodium bicarbonate or barium sulphate up to a maximum of 50%.

10. 100% biodegradable golf tees, according to claims 1-7, **characterized in that** in another different embodiment a biodegradable thermoplastic composed of biodegradable polymers derived from petroleum, between 50% and 100%, is used together with mineral filler such as calcium carbonate, sodium bicarbonate or barium sulphate up to a maximum of 50%.

11. 100% biodegradable golf tees, according to claims 1-10, **characterized in that** the mineral fillers are other carbonates and inert and non-toxic mineral salts which are suitable.
